# EUROPEAN PATENT APPLICATION

(11) **EP 4 407 442 A1**
(43) Date of publication of application: **31.07.2024**
(21) Application number: 23153489.2
(22) Date of filing: 26.01.2023
(51) Int. Cl.: G06F 8/60, G06F 9/455

(54) **COMPUTER-IMPLEMENTED METHOD AND COMPUTER PROGRAM PRODUCT FOR DEPLOYING A WEBASSEMBLY APPLICATION, APPARATUS AND INFORMATION AND COMMUNICATION SYSTEM**

(71) Applicant: Siemens Aktiengesellschaft, 80333 München (DE)
(72) Inventor: Mittermeier, Ludwig Andreas, 81541 München (DE); Müller, Harald, 82229 Seefeld-Hechendorf (DE)
(74) Representative: Siemens Patent Attorneys

(57) **Abstract**

A computer-implemented method for deploying at least a WebAssembly application to at least a first computing node of a Kubernetes system included in an information and communication system, in particular an automation system, is proposed. The method comprises the steps:
a) providing the at least one WebAssembly application to a deployment configurator,
b) encapsulating, by the deployment configurator, the provided at least one WebAssembly application together with a first WebAssembly runtime environment in a container,
c) storing at least the container, in particular in a registry unit, and
d) deploying the stored container on the first computing node in dependence on a first control command transmitted by a control plane of the Kubernetes system.

## Description

The present invention relates to a computer-implemented method and a computer program product for deploying a WebAssembly application. Further, the present invention relates to an apparatus for deploying a WebAssembly application as well as to an information and communication system.

WebAssembly (WASM) can be used for hardware abstraction and isolation of programs on constrained devices.

Originally, WASM is a web technology that allows to execute code in a secure and highly sandboxed environment in a web browser. In particular, WebAssembly can be used as a bytecode format for industrial automation functions. In this case, a WebAssembly runtime environment runs on computing devices that are used for executing industrial automation functions (WASM applications).

Typically, industrial automation programs in WASM format are small units and part of a distributed automation application consisting of several components (automation functions). These components can be other WASM applications or, for example, containerized services (non-WASM applications), including containerized automation functions.

Environments, where some automation functions are deployed as containers and others are deployed as WebAssembly applications are called "heterogeneous" environments. In contrast to this are "homogeneous" environments, where all automation functions are containerized. In both cases, a suitable orchestration system is required for deploying such distributed automation applications consisting of several automation functions.

In a homogeneous environment, Kubernetes can be used as an orchestration system. But Kubernetes cannot be used directly to deploy WASM applications. For certain WASM runtime environments, the open-source technology "Krustlet" [1] may be used. "Krustlet" is an implementation of a Kubelet written in the programming language Rust, which starts WASM applications on a WASM runtime environment.

However, using Krustlet in a heterogeneous environment including a deployment of mixed (hybrid) WASM and container runtime environments is challenging, since it has to be distinguished whether to deploy a WASM application or a container. In addition, communication between applications implemented in WASM cannot make use of the Kubernetes overlay network to communicate.

It is one object of the present invention to improve the deployment of a WebAssembly application.

According to a first aspect, a computer-implemented method for deploying at least a WebAssembly application to at least a first computing node of a Kubernetes system included in an information and communication system, in particular an automation system, is proposed. The method comprises the steps:
a) providing the at least one WebAssembly application to a deployment configurator,
b) encapsulating, by the deployment configurator, the provided at least one WebAssembly application together with a first WebAssembly runtime environment in a container,
c) storing at least the container, in particular in a registry unit, and
d) deploying the stored container on the first computing node in dependence on a first control command transmitted by a control plane of the Kubernetes system.

Using the present computer-implemented method, the deployment of a WebAssembly application (WASM application) is improved since a WASM application can be directly deployed on a node of a Kubernetes system without using Krustlet.

Since a WASM application is encapsulated together with the WASM runtime environment in a container, with the above-described computer-implemented method, the WASM application can be deployed on a Kubernetes node including a Kubelet and a container runtime environment and can be executed using the container runtime environment on the Kubernetes node without using Krustlet or a Krustlet node.

This has the advantage that applications, for example, software components, written in WASM can be deployed in a complete mix with containerized services in a Kubernetes system (Kubernetes cluster) using computing nodes including Kubelet and a container runtime environment. Thus, hybrid deployments which are a mix of WASM applications and containerized applications can be both deployed on one single Kubernetes system without using Krustlet. Therefore, WASM applications can be seamlessly deployed to container- and non-container (runtime) environments. Advantageously, on these respective used computing nodes, no WASM runtime environment needs to be installed to execute the WASM application. As the WASM application is executed in a container and the container is executed using Kubernetes, the WASM application can make use of the Kubernetes overlay network and all related address resolution means to communicate with other applications or services in the Kubernetes system, for example, other WASM applications or services running in another container.

A further advantage of the above-described computer-implemented method is that the existing Kubernetes orchestration system and its orchestration features can be leveraged, for example, by using a Kubernetes scheduler of the Kubernetes system for selecting a computing node for deploying the WASM application based on resource requirements and/or by using re-scheduling of WASM applications in case of failures using more complex deployment patterns of the Kubernetes system like replicas and/or daemon sets. In addition, WASM applications can be placed on computing nodes according to defined Quality of Service (QoS) criteria.

A computer-implemented method is a method which involves the use of a computer, a computer network or other programmable apparatus, where one or more features are realized wholly or partly by means of a computer program.

A WASM application can be embodied as a software, as a software application, as a service, in particular as a microservice, as a (computer) program, as a software module, as an automation application or automation function used in an automation system for controlling machines or executing other applications or computer code and/or as a code for executing it on a Web browser.

For example, a first computing node is a computing node or a computing machine of a Kubernetes system. The computing node includes a runtime environment and an operating system.

The Kubernetes system can also be referred to as a Kubernetes cluster. A Kubernetes cluster according to the first aspect is intended for deployment of applications, in particular containerized and non-containerized applications. The Kubernetes system includes a control unit which is embodied as the control plane. Further, the Kubernetes system includes the computing machines which are embodied as, for example, the first and second computing nodes. Each computing node can be either a physical or virtual machine. Each computing node can run pods which can include containers.

In particular, the Kubernetes system according to the first aspect is a heterogeneous system for deploying at least a WASM application and at least a containerized service together within the Kubernetes system on different computing nodes.

Preferably, the deployment configurator may be implemented in in software. The deployment configurator may or may not be deployed in the Kubernetes system. The deployment configurator can also generate deployment instructions and/or configuration files for the WASM application and/or the containerized encapsulated WASM application and the WASM runtime environment.

For example, a WASM runtime environment is "WasmEdge" or "Wasmer". The WASM runtime environment can start, terminate and/or monitor WASM applications.

The container can be a software container, in which a respective application, a WASM application and/or a service can be executed, and which is separated from other containers on the respective computing node, for example the first computing node. WASM applications or applications designed as microservices can also be executed independently of each other on the same hardware in a container. A group of WASM applications can also be executed on different containers or computing nodes of the Kubernetes system.

Specifically, the term "encapsulating" means that the WASM application and the WASM runtime environment are isolated or separated from its environment and are integrated together in a separate container, in particular a software container.

Preferably, the registry unit is a storage on which the container images, on which the Kubernetes system relies on, are stored. The registry unit can be part of the Kubernetes system or can be external to the Kubernetes system. In particular, the registry unit is an OCI-compliant ("Open Container Initiative") container registry. The registry unit can also be used to store WASM applications or at least other services or microservices as containerized automation functions.

The control unit can be embodied as a control plane of the Kubernetes system and for controlling the single components of the Kubernetes system. Preferably, the control plane generates multiple control commands, for example a first, a second, a third, a fourth or more control commands, for controlling the deploying of containers, applications, WASM applications and/or services to multiple computing nodes of the Kubernetes system. Thus, the control plane can also be referred to as application orchestration unit or container orchestration unit.

According to an embodiment, at least the first computing node includes a Kubelet for communicating with the control plane and a container runtime environment for executing the deployed container.

This embodiment has the same technical effects and advantages as the computer-implemented method according to the first aspect.

Preferably, a Kubelet in a Kubernetes system is an application which communicates with the control plane for transmitting data and control commands between the control plane and the computing node that the Kubelet is representing.

In particular, the container runtime environment, also known as container engine, is a software component that can run or execute containers on an operating system. An example for a container runtime environment is the Docker engine.

According to a further embodiment, the method includes:

This embodiment has the advantage that it is possible to execute the WASM application, which is included in the deployed container, on the first computing node by means of the container runtime environment.

The respective computing node, for example, the first computing node, the second computing node, the third computing node and/or the fourth computing node, can be formed as an automation device. Preferably, a program logic in the deployed container may communicate or interact with another device which is not a respective computing node.

The automation device can be a field device in an automation system. In particular, a field device is a hardware- and/or software-implemented unit that has or provides a specific functionality. Preferably, a field device provides at least a plurality of applications which it has received from the control plane of the Kubernetes system and/or a persistent storage unit. Examples of field devices include sensors, robots, measurement devices, computers, and the like. Sensors can also be attached to field devices. In particular, such field devices include control computers or microcontrollers, such as a field-programmable gate array (FPGA). A field device can also be a single controller or a single device. However, a field device may also have a plurality of controllers or functional units, such as a control cabinet, that are, for example, structurally connected and/or can functionally interact with each other. In this case, each controller or functional unit combined in the field device can be regarded as a field device linked to and/or dependent on the other controllers or functional units.

The automation system can be an automation plant from the process industry, the chemical industry, the pharmaceutical industry, the petrochemical industry or a plant from the food and beverage industry. This also includes any plant from the manufacturing and production industry and plants in which, for example, cars or goods of any kind are produced.

Furthermore, the automation plant can also be designed as a power generation plant, such as a wind turbine, a solar plant or a power plant.

According to a further embodiment, the Kubernetes system further includes a second computing node including a second WebAssembly runtime environment, wherein step c) further includes:
storing the provided at least one WebAssembly application in the registry unit,
wherein step d) further includes:
   deploying the stored WebAssembly application on the second computing node in dependence on a second control command transmitted by the control plane of the Kubernetes system.

According to a further embodiment, the second computing node further includes a Krustlet for communicating with the control plane, and wherein the second WebAssembly runtime environment executes the deployed WebAssembly application.

In particular, analogous to the first computing node, the second computing node is also a computing node or a computing machine of a Kubernetes system which includes a runtime environment and an operating system. Preferably, the runtime environment of the second computing node is a WASM runtime environment such as the second WASM runtime environment. Examples for the second WASM runtime environment are also "WasmEdge" or "Wasmer".

Further, when using Krustlet or a virtual Kubelet, the stored WASM application can include configuration parameters for a deployment using Krustlet or the virtual Kubelet.

According to a further embodiment, the Kubernetes system further includes a third computing node including a third WebAssembly runtime environment, wherein step d) further includes:
deploying the stored WebAssembly application on the third computing node by means of a virtual Kubelet of the Kubernetes system in dependence on a third control command transmitted by the control plane of the Kubernetes system.

According to a further embodiment, the virtual Kubelet implements a WebAssembly provider, wherein the WebAssembly provider interacts with the third WebAssembly runtime environment in order to start, terminate and/or monitor the deployed WebAssembly application.

This embodiment has the advantage that in the third computing node which uses the virtual Kubelet, no Krustlet implementation is necessary for deploying and executing the WASM application on the third computing node. Therefore, less resources are required on the third computing node.

A further advantage is that the third WASM runtime environment, which is implemented on the third computing node, can support arbitrarily many WASM runtime environments on which the WASM application can run, wherein in contrast, Krustlet can only support a subset of existing WASM runtime environments. Further, when using Krustlet, the supporting of an additional runtime environment for executing the WASM application requires implementation of a variant of the WASM provider that complies with the interface, in particular the application programming interface, of the WASM runtime environment which is challenging and requires more resources for the deploying of the above-mentioned WASM application.

A further advantage is that the deployment of the virtual Kubelet is easier since the (normal) Kubernetes system and its components can be used for this.

In particular, a virtual Kubelet or a further virtual Kubelet is a Kubernetes Kubelet implementation that masquerades as a Kubelet [2].

Preferably, the third computing node is, analogous to the first and second computing nodes, also a computing node or a computing machine of a Kubernetes system which includes a runtime environment and an operating system. Specifically, the runtime environment of the third computing node is a WASM runtime environment such as the third WASM runtime environment or a fourth WASM runtime environment. Examples for the third WASM runtime environment are also "WasmEdge" or "Wasmer".

For example, a WebAssembly provider or a further WebAssembly provider is an implementation of a provider in the virtual Kubelet architecture framework that is done specifically to interface with a dedicated WASM runtime environment.

According to a further embodiment, the virtual Kubelet is executed on the third computing node.

For the (WASM) virtual Kubelet, there are several provisioning or deployment options possible.

In this embodiment, the virtual Kubelet is deployed and executed on the third computing node where the third WASM runtime environment resides and where it deploys WASM applications.

According to a further embodiment, the virtual Kubelet is executed within a specific container within the Kubernetes system or is executed in a further computing node of the Kubernetes system.

In this embodiment, the virtual Kubelet is deployed and executed within the specific container or is deployed and executed in the further computing node which is a computing node separated from the third computing node.

These both deployment options of this embodiment have the advantage that less resources are required since only one WASM runtime environment and one operating system are required on the respective computing node for executing the WASM application. Further, if the virtual Kubelet is deployed and executed within the specific container, the deployment of the WASM virtual Kubelet is easier since the components of the Kubernetes system can be used for this.

The specific container can be implemented as a software container. The further computing node can be also a computing node or a computing machine of the Kubernetes system.

According to a further embodiment, the Kubernetes system further includes a fourth computing node, wherein step d) further includes:
deploying the stored WebAssembly application on the fourth computing node by means of a further virtual Kubelet in dependence on a fourth control command transmitted by the control plane of the Kubernetes system.

According to a further embodiment, the Kubernetes system further includes a pod including a fourth WebAssembly runtime environment and the further virtual Kubelet which implements a further WebAssembly provider, wherein the further WebAssembly provider interacts with the fourth WebAssembly runtime environment on the pod in order to start, terminate and/or monitor the deployed WebAssembly application on the fourth computing node.

The usage of a pod according to this embodiment has several advantages:
Using the pod including the virtual Kubelet together with the fourth WASM runtime environment, it is possible to deploy and execute on a computing node which has no WASM runtime environment, for example, the fourth computing node, a WASM application.

By means of the fourth WASM runtime environment included in the pod, it is possible to deploy and execute multiple WASM applications with only one single WASM runtime environment, namely the fourth WASM runtime environment, to multiple computing nodes which use Kubelet and a container runtime environment. Thus, less resources are required for executing multiple WASM applications in a Kubernetes system.

Further, industrial automation functions can be deployed as WASM applications using the pod and the virtual Kubelet without using Krustlet on the fourth computing node which includes a Kubelet and the container runtime environment.

Moreover, WASM applications which are deployed to the same computing node are executed in the same WASM runtime environment such as the fourth WASM runtime environment, enabling them to interact with each other.

In addition, the fourth WASM runtime environment can also make use of the Kubernetes overlay network by using the control plane, which enables it to provide communication between different computing nodes and/or pods.

In this embodiment, a fourth WebAssembly runtime environment is deployed together with the further virtual Kubelet into the pod which is executed in the Kubernetes system.

In particular, this works as follows:
Preferably, a respective ("WASlet") pod is deployed on each computing node that shall run WASM applications, in this case the fourth computing node. Then, the further virtual Kubelet can register the pod and the fourth computing node at the control plane of the Kubernetes system as a new (virtual) node that can execute WASM applications. For example, when a WASM application is deployed on the pod, the virtual Kubelet instantiates the WASM application on the fourth WASM runtime environment in the pod. In particular, all WASM applications deployed to the same node will be executed on the same WASM runtime environment in the pod.

Specifically, multiple WASM applications are stored in the registry unit and are deployed on the fourth computing node or multiple other computing nodes of the Kubernetes system by means of the further virtual Kubelet in dependence on the fourth control command or multiple control commands transmitted by the control plane of the Kubernetes system.

The fourth computing node can also be a computing node or a computing machine of the Kubernetes system which includes a runtime environment and an operating system. The runtime environment of the fourth computing node can be the container runtime environment. The fourth computing node includes, analogous to the first computing node, a Kubelet, the container runtime environment and an operating system, for example, Linux.

Preferably, the pod is a "WASlet" pod. In particular, the term "WASlet" includes a combination of the terms "WebAssembly" and "Kubelet".

According to a further embodiment, the pod further includes a first container including the further virtual Kubelet and the fourth WebAssembly runtime environment or the pod further includes the first container and a second container, wherein the first container includes the further virtual Kubelet, and the second container includes the fourth WebAssembly runtime environment.

The first container and/or the second container can be respectively implemented as a software container.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an apparatus for deploying at least a WebAssembly application to at least a first computing node of a Kubernetes system included in an information and communication system, in particular an automation system, is proposed. The apparatus comprises:
a receiving unit for receiving at least a provided WebAssembly application,
an encapsulating unit for encapsulating the received at least one provided WebAssembly application together with a first WebAssembly runtime environment in a container,
a storage unit for storing at least the container, and
a deploying unit for deploying the stored container in dependence on a first control command transmitted by a control plane of the Kubernetes system to the first computing node.

The technical effects and advantages described for the computer-implemented method according to the first aspect apply equally to the apparatus according to the third aspect. Further, embodiments and features described with reference to the computer-implemented method according to the first aspect apply mutatis mutandis to the apparatus according to the third aspect.

The respective unit, e.g., the receiving unit and/or the encapsulating unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

For example, the deployment configurator is configured to temporarily store at least the deployed container.

The apparatus can include parts of the deployment configurator and the control plane and can be connected with the deployment configurator and the control plane. For example, the receiving unit and the encapsulating unit can respectively include the deployment configurator or parts of the deployment configurator for receiving the provided WebAssembly application and for encapsulating the received provided WebAssembly application together with a first WebAssembly runtime environment in a container. In particular, the deploying unit can include parts of the control plane for deploying the stored container in dependence on a first control command of the control plane of the Kubernetes system to the first computing node.

In particular, the storage unit is the registry unit. The registry unit can be connected to a persistent storage unit of the Kubernetes system for exchanging data between the registry unit and the persistent storage unit.

According to a fourth aspect, an information and communication system, in particular an automation system, including an apparatus according to the third aspect and a first computing node including a container runtime environment is proposed. The container runtime environment is configured to execute, in dependence on the first control command transmitted by the control plane of the Kubernetes system, the deployed container on the first computing node.

The technical effects and advantages described for the computer-implemented method according to the first aspect apply equally to the information and communication system according to the fourth aspect. Further, embodiments and features described with reference to the computer-implemented method according to the first aspect apply mutatis mutandis to the information and communication system according to the fourth aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of an embodiment of an information and communication system;
- Fig. 2: shows a schematic flowchart of an embodiment of a computer-implemented method for deploying a WebAssembly application; and
- Fig. 3: shows a schematic block diagram of an apparatus for deploying a WebAssembly application.

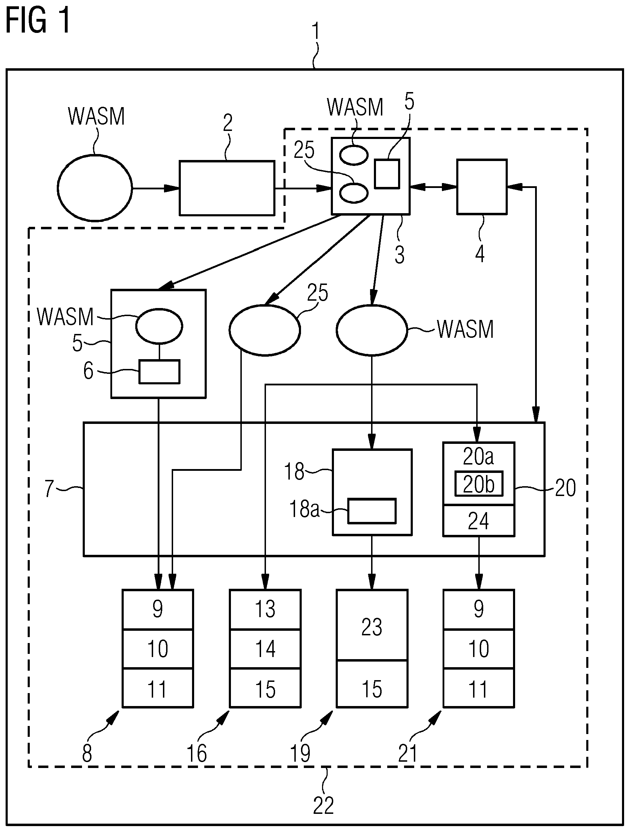

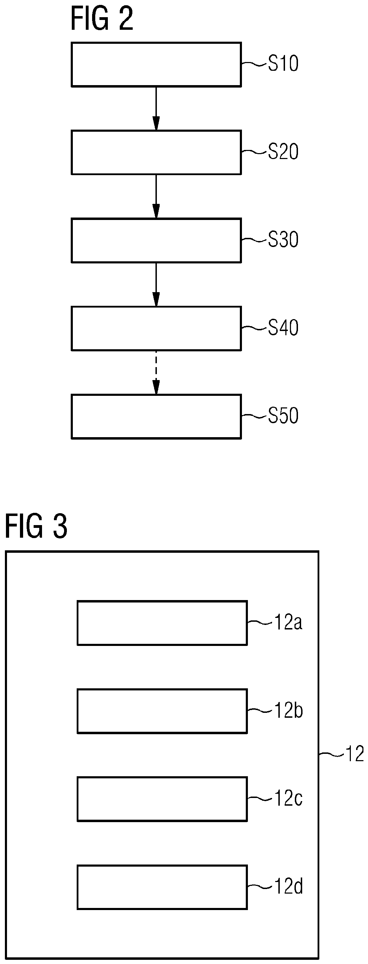

In the Figures, like reference numerals designate like or functionally equivalent elements, unless otherwise indicated. Fig. 1 shows a schematic block diagram of an embodiment of an information and communication system 1. In Fig. 1, the information and communication system 1 is an automation system. The information and communication system 1 includes a deployment configurator 2. In addition, references to the method steps of Fig. 2, which describes a computer-implemented method for deploying a WebAssembly application WASM, are indicated in parentheses in the following explanations of Fig. 1.

The information and communication system 1 of Fig. 1 includes a provided WebAssembly application WASM and a Kubernetes system 22.

The Kubernetes system 22 of Fig. 1 includes a registry unit 3 and a persistent storage unit 4, wherein the registry unit 3 and the persistent storage unit 4 are connected for exchanging data between them. In embodiments, the registry unit 3 is not part of the Kubernetes system 22 (not shown). Further, the Kubernetes system 22 of Fig. 1 includes a control plane 7 which is embodied as a control plane of the Kubernetes system 22, a first computing node 8, a second computing node 16, a third computing node 19 and a fourth computing node 21. The registry unit 3 is connected to (not shown) the control plane 7. The persistent storage unit 4 is also connected to the control plane 7. In addition, each of the computing nodes 8, 16, 19 and 21 includes a "kube-proxy" (not shown) for communicating with the control plane 7.

Further components of a Kubernetes system 22, for example, a "kube-apiserver", a "kube-scheduler ", a "kube-controller-manager", a key-value store database ("etcd" [3]), which are connected to the control plane 7 and/or are part of the control plane 7, are not shown in the Figures for the sake of simplicity.

In sum, in Fig. 1, a Kubernetes system 22 is shown, in which the WebAssembly application WASM is deployed based on several examples to each computing node 8, 16, 19 and 21 in a different way.

In a first example in Fig. 1, the WebAssembly application WASM is provided to the deployment configurator 2 (see also method step S10 of Fig. 2). It is also possible that the WebAssembly application WASM is directly provided to the registry unit 3. In embodiments, the deployment configurator 2 is part of the Kubernetes system 22 (not shown).

Further, the provided WebAssembly application WASM is encapsulated, by the deployment configurator 2, together with a first WebAssembly runtime environment 6 in a container 5 (see also method step S20 of Fig. 2).

Then, at least the container 5 is stored in the registry unit 3 (see also method step S30 of Fig. 2). Further, as can be seen in Fig. 1, the WebAssembly application WASM is separately stored in the registry unit 3. In addition, a containerized application 25 which includes an application or a microservice included in a container, is also stored in the registry unit 3.

Finally, the stored container 5 is deployed on the first computing node 8 in dependence on a first control command (not shown) transmitted by the control plane 7 of the Kubernetes system 22 (see also method step S40 of Fig. 2). The deploying of the stored container 5 to the first computing node 8 is shown in Fig. 1 by means of the arrow from the stored container 5 to the first computing node 8 via the control plane 7.

The first computing node 8 as well as the fourth computing unit 21 respectively including a Kubelet 9 for communicating with the control plane 7, a container runtime environment 10 for executing the deployed container 5 and an operating system 11.

After that, the deployed container 5 can be executed by means of the container runtime environment 10 on the first computing node 8 (see also method step S50 of Fig. 2). Further, also the containerized application 25 can be deployed on the first computing node 8 in dependence on the first control command (not shown) transmitted by the control plane 7.

In a second example in Fig. 1, the stored WebAssembly application WASM is deployed on the second computing node 16 in dependence on a second control command (not shown) transmitted by the control plane 7. The deploying of the stored WebAssembly application WASM to the second computing node 16 is shown in Fig. 1 by means of the arrow from the WebAssembly application WASM to the second computing node 16 via the control plane 7.

The second computing node 16 includes a second WebAssembly runtime environment 14 for executing the deployed WebAssembly application WASM, a Krustlet 13 for communicating with the control plane 7 and a further operating system 15.

In a third example in Fig. 1, the stored WebAssembly application WASM is deployed on the third computing node 19 by means of a virtual Kubelet 18 of the Kubernetes system 22 in dependence on a third control command (not shown) transmitted by the control plane 7. The third computing node 19 includes a third WebAssembly runtime environment 23 and the further operating system 15.

The virtual Kubelet 18 implements a WebAssembly provider 18a. The WebAssembly provider 18a interacts with the third WebAssembly runtime environment 23 in order to start, terminate and/or monitor the deployed WebAssembly application WASM.

In Fig. 1, the virtual Kubelet 18 can be executed on the control plane 7 and can be part of the control plane 7. Further, in embodiments, the virtual Kubelet 18 is executed on the third computing node 19, is executed within a specific container within the Kubernetes system 22 or is executed in a further computing node of the Kubernetes system 22 (not shown).

In a fourth example in Fig. 1, the stored WebAssembly application WASM is deployed on the fourth computing node 21 by means of a further virtual Kubelet 20a in dependence on a fourth control command (not shown) transmitted by the control plane 7.

In Fig. 1, the Kubernetes system 22 further includes a pod 20. The pod 20 is connected to the control plane 7 and can be part of the control plane 7. The pod 20 includes a fourth WebAssembly runtime environment 24 and the further virtual Kubelet 20a which implements a further WebAssembly provider 20b. In Fig. 1, the further WebAssembly provider 20b interacts with the fourth WebAssembly runtime environment 24 on the pod 20 in order to start, terminate and/or monitor the deployed WebAssembly application WASM on the fourth computing node 21.

In embodiments, the pod 20 includes a first container including the further virtual Kubelet 20a and the fourth WebAssembly runtime environment 24 or the pod 20 further includes the first container and a second container, wherein the first container includes the further virtual Kubelet 20a and the second container includes the fourth WebAssembly runtime environment 24 (not shown).

Fig. 2 shows a schematic flowchart of an embodiment of a computer-implemented method for deploying a WebAssembly application WASM (see Fig. 1) to a first computing node 8 (see Fig. 1) of a Kubernetes system 22 (see Fig. 1) included in an information and communication system 1 according to Fig. 1. The respective method steps S10 - S40 of the computer-implemented method have already been explained above in terms of Fig. 1, which is why, in order to avoid repetitions, the method steps S10 - S40 are not explained again. This also applies to the method step S50 which is an embodiment of the method steps S10 - S40 of the computer-implemented method and is thus connected to the method steps S10 - S40 in Fig. 2 via a dashed line including at one end an arrow.

Fig. 3 shows a schematic block diagram of an apparatus 12 for deploying a WebAssembly application WASM (see also Fig. 1) to a first computing node 8 (see Fig. 1) of a Kubernetes system 22 (see Fig. 1) included in an information and communication system 1 according to Fig. 1.

The apparatus 12 according to Fig. 3 comprises a receiving unit 12a, an encapsulating unit 12b, a storage unit 12c and a deploying unit 12d.

The receiving unit 12a is configured to receive a provided WebAssembly application WASM. Further, the encapsulating unit 12b is configured to encapsulate the received provided WebAssembly application WASM together with a first WebAssembly runtime environment 6 (see Fig. 1) in a container 5 (see Fig. 1). The storage unit 12c is configured to store the container 5. Moreover, the deploying unit 12d is configured to deploy the stored container 5 in dependence on a first control command transmitted by a control plane 7 (see Fig. 1) of the Kubernetes system 22 to the first computing node 8.

Further, a container runtime environment 10 (see Fig. 1) of the first computing node 8 is configured to execute, in dependence on the first control command, the deployed container 5 on the first computing node 8.

Although the present invention has been described in accordance with preferred embodiments, it is obvious for the person skilled in the art that modifications are possible in all embodiments.

### References:

[1] https://krustlet.dev/
[2] https://virtual-kubelet.io/
[3] https://etcd.io/

## Claims

1. Computer-implemented method for deploying at least a WebAssembly application (WASM) to at least a first computing node (8) of a Kubernetes system (22) included in an information and communication system (1), in particular an automation system, the method comprising:
a) providing (S10) the at least one WebAssembly application (WASM) to a deployment configurator (2),
b) encapsulating (S20), by the deployment configurator (2), the provided at least one WebAssembly application (WASM) together with a first WebAssembly runtime environment (6) in a container (5),
c) storing (S30) at least the container (5), in particular in a registry unit (3), and
d) deploying (S40) the stored container (5) on the first computing node (8) in dependence on a first control command transmitted by a control plane (7) of the Kubernetes system (22) .

2. The method according to claim 1,
**characterized in**
**that** at least the first computing node (8) includes a Kubelet (9) for communicating with the control plane (7) and a container runtime environment (10) for executing the deployed container (5).

3. The method according to claim 1 or 2,
**characterized by**:
e) executing (S50) the deployed container (5) on the first computing node (8) by means of the container runtime environment (10).

4. The method according to one of claims 1 - 3,
**characterized in**
**that** the Kubernetes system (22) further includes a second computing node (16) including a second WebAssembly runtime environment (14), wherein step c) (S30) further includes:
storing the provided at least one WebAssembly application (WASM) in the registry unit (3),
wherein step d) (S40) further includes:
deploying the stored WebAssembly application (WASM) on the second computing node (16) in dependence on a second control command transmitted by the control plane (7) of the Kubernetes system (22).

5. The method according to claim 4,
**characterized in**
**that** the second computing node (16) further includes a Krustlet (13) for communicating with the control plane (7), and wherein the second WebAssembly runtime environment (14) executes the deployed WebAssembly application (WASM).

6. The method according to claim 4,
**characterized in**
**that** the Kubernetes system (22) further includes a third computing node (19) including a third WebAssembly runtime environment (23), wherein step d) (S40) further includes:
deploying the stored WebAssembly application (WASM) on the third computing node (19) by means of a virtual Kubelet (18) of the Kubernetes system (22) in dependence on a third control command transmitted by the control plane (7) of the Kubernetes system (22).

7. The method according to claim 6,
**characterized in**
**that** the virtual Kubelet (18) implements a WebAssembly provider (18a), wherein the WebAssembly provider (18a) interacts with the third WebAssembly runtime environment (23) in order to start, terminate and/or monitor the deployed WebAssembly application (WASM).

8. The method according to claim 6 or 7,
**characterized in**
**that** the virtual Kubelet (18) is executed on the third computing node (19).

9. The method according to claim 6 or 7,
**characterized in**
**that** the virtual Kubelet (18) is executed within a specific container within the Kubernetes system (22) or is executed in a further computing node of the Kubernetes system (22).

10. The method according to one of claims 4 - 9, **characterized in**
**that** the Kubernetes system (22) further includes a fourth computing node (21), wherein step d) (S40) further includes:
deploying the stored WebAssembly application (WASM) on the fourth computing node (21) by means of a further virtual Kubelet (20a) in dependence on a fourth control command transmitted by the control plane (7) of the Kubernetes system (22) .

11. The method according to claim 10,
**characterized in**
**that** the Kubernetes system (22) further includes a pod (20) including a fourth WebAssembly runtime environment (24) and the further virtual Kubelet (20a) which implements a further WebAssembly provider (20b), wherein the further WebAssembly provider (20b) interacts with the fourth WebAssembly runtime environment (24) on the pod (20) in order to start, terminate and/or monitor the deployed WebAssembly application (WASM) on the fourth computing node (21).

12. The method according to claim 11,
**characterized in**
**that** the pod (20) further includes a first container including the further virtual Kubelet (20a) and the fourth WebAssembly runtime environment (24) or the pod (20) further includes the first container and a second container, wherein the first container includes the further virtual Kubelet (20a) and the second container includes the fourth WebAssembly runtime environment (24).

13. A computer program product comprising a program code for executing the computer-implemented method according to one of claims 1 - 12 when run on at least one computer.

14. Apparatus (12) for deploying at least a WebAssembly application (WASM) to at least a first computing node (8) of a Kubernetes system (22) included in an information and communication system (1), in particular an automation system, the apparatus (12) comprising:
a receiving unit (12a) for receiving at least a provided WebAssembly application (WASM),
an encapsulating unit (12b) for encapsulating the received at least one provided WebAssembly application (WASM) together with a first WebAssembly runtime environment (6) in a container (5),
a storage unit (12c) for storing at least the container (5), and
a deploying unit (12d) for deploying the stored container (5) in dependence on a first control command transmitted by a control plane (7) of the Kubernetes system (22) to the first computing node (8).

15. Information and communication system (1), in particular an automation system, including an apparatus (12) according to claim 14 and the first computing node (8) including a container runtime environment (10), wherein the container runtime environment (10) is configured to execute, in dependence on the first control command transmitted by the control plane (7) of the Kubernetes system (22), the deployed container (5) on the first computing node (8).
